# EUROPÄISCHE PATENTSCHRIFT

(11) **EP 0 654 573 B1**
(45) Veröffentlichungstag und Bekanntmachung des Hinweises auf die Patenterteilung: **17.06.1998**
(21) Anmeldenummer: 94114194.7
(22) Anmeldetag: 09.09.1994
(51) Int. Cl.: E05D 15/50, E05D 7/10, A45C 13/34, B60R 9/055

(54) **Koffer, insbesondere Dachkoffer für Kraftfahrzeuge**
Box, in particular a vehicle roof luggage box
Boîte, notamment boîte à bagages pour le toit d'un véhicule

(30) Priorität: 24.11.1993 DE 4340083
(43) Veröffentlichungstag der Anmeldung: 24.05.1995
(73) Patentinhaber: HUWIL-Werke GmbH Möbelschloss- u. Beschlagfabriken, 53809 Ruppichteroth (DE); Thule GmbH, 92318 Neumarkt (DE)
(72) Erfinder: Grönwoldt, Rolf, D-53809 Ruppichteroth (DE); Hirtsiefer, Artur, D-53809 Ruppichteroth-Winterscheid (DE); Deisenhofer, Siegfried, D-91567 Herrieden (DE)
(74) Vertreter: Harwardt, Günther

(56) Entgegenhaltungen:
- EP-A- 0 422 678
- DE-C- 3 925 708
- FR-A- 853 371

## Beschreibung

Die Erfindung betrifft einen Koffer, insbesondere Dachkoffer für Kraftfahrzeuge, mit zwei Kofferteilen, nämlich einem Unterteil und einem Deckel, welche jeweils an zwei zueinander parallelen Seiten über mindestens je zwei Scharniere um eine Scharnierachse zueinander verschwenkbar sind, wobei die Scharniere jeweils aus einem eine Hülse umfassenden ersten und einem einen Scharnierzapfen umfassenden zweiten Scharnierteil bestehen, von denen eines dem Deckel und das andere dem Unterteil zugeordnet ist und wobei der Scharnierzapfen in oder außer Eingriff zur Hülse verstellbar ist.

Ein solcher Dachkoffer ist in der FR-A-853 371 beschrieben. Es ist ein Dachkoffer offenbart, bei dem an den beiden Enden der Längsseiten jeweils am Unterteil und am Deckel Hülsen mit Abstandshaltern angebracht sind, welche im geschlossenen Zustand des Dachkoffers in übereinstimmender Lage zueinander sind. In den am Unterteil angeordneten Hülsen sind zwei Riegelstangen verschiebbar geführt, die mit ihren anderen Enden an einen mittig der Längsseite angeordneten gemeinsamen Drehknopf exzentrisch zur Drehachse desselben angelenkt sind. Beim Verschwenken des Drehknopfes können die Riegelstangen in oder außer Eingriff zu den Hülsen, die am Deckel festgelegt sind, gebracht werden.

Jedem Scharnier ist somit eine separate Riegelstange zugeordnet. Diese sind durch ein gemeinsames Betätigungselement in Form des Drehknopfes verstellbar. Da die Riegelstangen bei Verstellung sowohl eine Schwenk- als auch eine Verschiebebewegung ausführen, ist nur eine ungenaue Führung gegeben. Dies bedeutet auch, daß eine entsprechend ungenaue Führung bei Nutzung als Scharnier gegeben ist. Ferner ist diese Anordnung nur geeignet, zwei Verriegelungen gleichzeitig zu betätigen, da ansonsten die Riegelstangen sich gegenseitig behindern und die Einhaltung einer gemeinschaftlichen Scharnierachse nicht möglich ist. Somit können auch bei langen Dachkoffern nur zwei Scharnier- und Riegelstellen pro Längsseite verwirklicht werden. Dies bedeutet, daß keine sichere Haltung und Führung der Teile zueinander gegeben ist.

Ferner ist in der US-A-4 420 105 ein Dachkoffer für ein Kraftfahrzeug mit einer Schließvorrichtung beschrieben, bei dem zwei par-allele Seiten des Dachkoffers mit zueinander korrespondierenden und jeweils als Hülse ausgebildeten Scharnierteilen versehen sind. Zur Verbindung der Scharnierteile dient ein elastisches Kabel, das durch die Hülsen hindurchgesteckt wird. Das elastische Kabel bildet damit gleichzeitig die Scharnierachse. Um den Dachkoffer von einer der beiden Seiten zu öffnen, wird an der zu öffnenden Seite das Kabel herausgezogen, so daß die Verbindung zwischen den Ösen des Deckels und des Unterteiles aufgehoben wird und der Deckel im Verhältnis zum Unterteil um das die Scharnierachse der anderen Seite bildende Kabel verschwenkt werden kann. Ferner ist je Seite eines der Ösenpaare, die dem Dekkel bzw. Unterteil zugehörig sind, mit einem Langloch versehen, das sowohl zur Aufnahme des Kabels als auch zur Aufnahme eines Bügels eines Schlosses dient, so daß Unterteil und Deckel fest miteinander verbunden sind.

Bei dieser Ausführungsform kann nur eine Ungefährführung zwischen Deckel und Unterteil erreicht werden, da das Kabel von Hand eingefädelt werden und damit elastisch sein muß. Darüber hinaus ist das Einfädeln aufwendig, um eine der Seiten lösen zu können. Das Einfädeln bzw. Herausziehen des Kabels erfordert eine erhebliche Fingerfertigkeit und Übung. Darüber hinaus ist die Festigkeit des Kabels nicht geeignet, eine sichere Führung und Zuhaltung zu bieten, wenn der Dachkoffer so gefüllt ist, daß der Deckel auf das Unterteil aufgepreßt werden muß.

Der Erfindung liegt die Aufgabe zugrunde, eine Schließvorrichtung für einen Dachkoffer zu schaffen, bei dem eine Öffnung von zwei parallelen Seiten möglich und die Betätigung vereinfacht ist, d.h. die Möglichkeit zu einer zentralen Ver- bzw. Entriegelung der Scharniere jeweils einer Seite vorhanden ist. Darüber hinaus soll eine sichere Halterung der beiden Teile in der Schließstellung zueinander gegeben sein.

Diese Aufgabe wird bei einem eingangs erwähnten Koffer erfindungsgemäß dadurch gelöst, daß daß jedes zweite Scharnierteil ein Lagergehäuse umfaßt, daß die Scharnierzapfen aller einer Seite zugehörigen Scharniere an einer gemeinsamen Betätigungsstange angebracht sind und die Scharnierachse bilden, daß jede Betätigungsstange in den Scharnieren zugehörigen Lagergehäusen parallel zur Scharnierachse verstellbar geführt ist, derart, daß zur Verschwenkung des Deckels um die Scharnierzapfen der einen der Seiten zugehörigen Scharniere, die Scharnierteile, die den Scharnieren der anderen Seite zugehörig sind, durch Verschieben der zugehörigen Betätigungsstange außer Eingriff gebracht werden und daß jeweils in einem der einer Seite zugehörigen Lagergehäusen ein Schließzylinder drehbar gelagert ist, welcher zur Verstellung der Betätigungsstange dient.

Von Vorteil bei dieser Lösung ist, daß starre Scharnierzapfen vorgesehen sind, die jeweils mit einer Betätigungsstange je Seite verbunden sind, welche die Scharnierachse bilden. Durch die Zuordnung der Scharnierzapfen zur einer Betätigungsstange wird eine einfache Führung erzielt. Ein Einfädeln ist nicht erforderlich. Sämtliche einer Betätigungsstange zugeordneten Scharnierzapfen werden gleichzeitig betätigt und bewegen sich gemeinsam in oder außer Eingriff zu den jeweils zugehörigen Hülsen des anderen Scharnierteiles.

Durch diese Ausbildung wird eine eindeutig definierte und genaue Scharnierachse gebildet. Darüber hinaus wird eine erhebliche Festigkeit erzielt, so daß auch der Deckel im Verhältnis zum Unterteil bei einer Ladung, die zu Belastungen auf den Deckel führt, sicher gehalten ist. Das Lagergehäuse ist vorzugsweise mit dem Unterteil fest verbunden. Alle Lagergehäuse sind so zueinander ausgerichtet einer Seite zugeordnet, daß sie die Betätigungsstange führen.

Vorzugsweise ist die Hülse an einem mit einem Befestigungsflansch versehenen, abgewinkelten Arm angebracht. Das erste Scharnierteil ist über den Befestigungsflansch mit dem Deckel des Dachkoffers, beispielsweise durch Vernieten, verbunden.

Zur Bewegung der Betätigungsstange durch den Schließzylinder weist diese einen Vielkantzapfen auf, auf den ein Betätigungshebel aufgesteckt ist, in dem ein vertikal zur Betätigungsstange bzw. zur Scharnierachse verlaufendes Langloch angebracht ist, in das ein exzentrisch am Schließzylinder angebrachter Betätigungszapfen in Eingriff ist.

Um beim Schließen des Deckels die Zentrierung der dem Deckel zugehörigen Lagerhülsen in Bezug auf die dem zweiten Scharnierteil zugeordneten Scharnierzapfen zu erreichen, ist jedes Lagergehäuse des zweiten Scharnierteils mit einer Zentrierausnehmung versehen, welche die damit zusammenarbeitenden Hülsen in Richtung auf den Scharnierzapfen ausrichten.

Eine günstige festigkeitsmäßige Gestaltung ergibt sich dadurch, daß die Scharnierzapfen aller einer Seite zugehörige Scharniere der zugehörigen Betätigungsstange angeformt sind, d.h. stoffschlüssig mit dieser verbunden sind.

Um die Festigkeit noch zu erhöhen, mit der der Deckel im Verhältnis zum Unterteil in der Schließposition gehalten wird, ist vorgesehen, daß der Scharnierzapfen im eingerückten Zustand die Hülse passiert und in eine Bohrung des Lagergehäuses eintaucht.

Es wird auf diese Weise eine Art zweischnittige Lagerung erzielt.

Ein bevorzugtes Ausführungsbeispiel der Erfindung ist in der Zeichnung schematisch dargestellt.

Es zeigt
- Figur 1: eine Draufsicht auf das Unterteil des Dachkoffers bei entferntem Deckel,
- Figur 2: einen Schnitt II-II gemäß Figur 1, wobei jedoch der Deckel im Verhältnis zum Unterteil im geschlossenen Zustand dargestellt ist,
- Figur 3: den Dachkoffer im Verhältnis zum Unterteil um eine erste Seite nach oben in die geöffnete Stellung verschwenkten Deckel,
- Figur 4: den Dachkoffer im Verhältnis zum Unterteil um eine zur ersten Seite gemäß Figur 3 parallelen Seite nach oben in die geöffnete Stellung verschwenkten Deckel,
- Figur 5: eine Ansicht auf ein Scharnier in Richtung des Pfeiles A gemäß Figur 2, bei ausgerücktem Scharnierzapfen,
- Figur 6: eine Ansicht vergleichbar zu der gemäß Figur 5, jedoch bei eingerücktem Scharnierzapfen,
- Figur 7: einen Schnitt VII-VII gemäß Figur 1 jedoch bei in Schließstellung befindlichem Deckel und mit einem Schließzylinder zur Betätigung der Scharnierzapfen der zugehörigen Betätigungsstange,
- Figur 8: eine Schnittansicht entsprechend Figur 7, wobei jedoch der Deckel im Verhältnis zum Unterteil in seine Öffnungsposition verschwenkt ist und
- Figur 9: eine Schnittansicht, vergleichbar zu der gemäß Figur 8, jedoch nach der Schnittlinie IX-IX von Figur 1, wobei das Scharnier jedoch nicht mit einem Zylinderschloß versehen ist, sondern dessen Zapfen über die zugehörige Betätigungsstange von dem dem zentralen Scharnier zugeordneten Schloß betätigt wird.

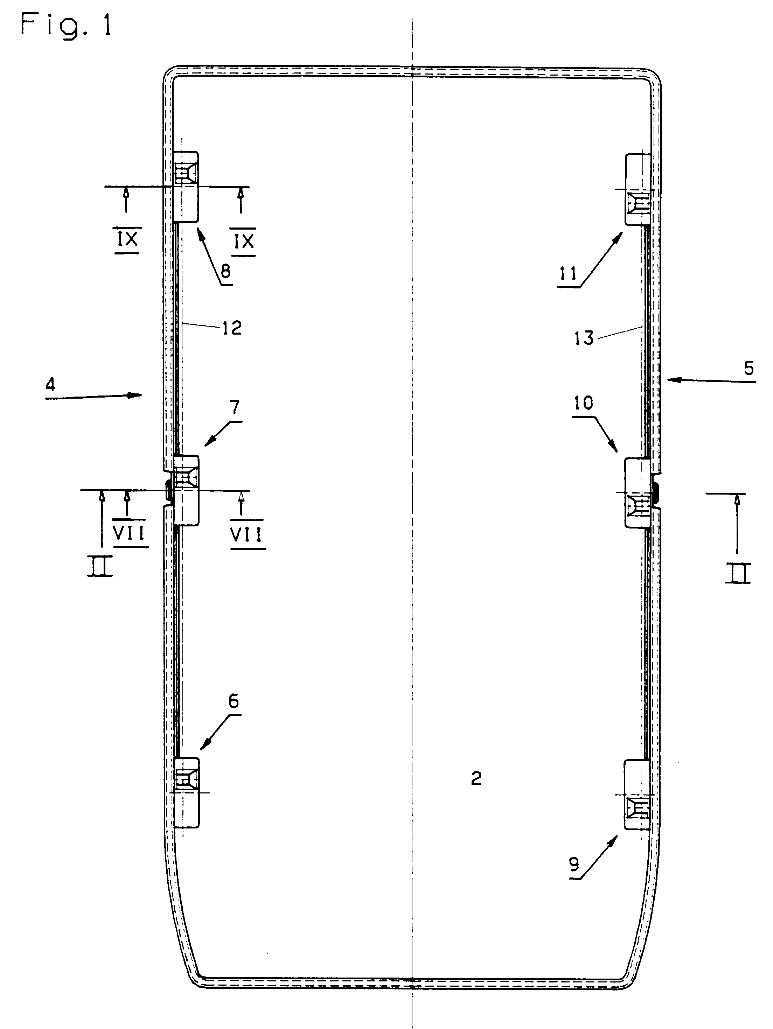

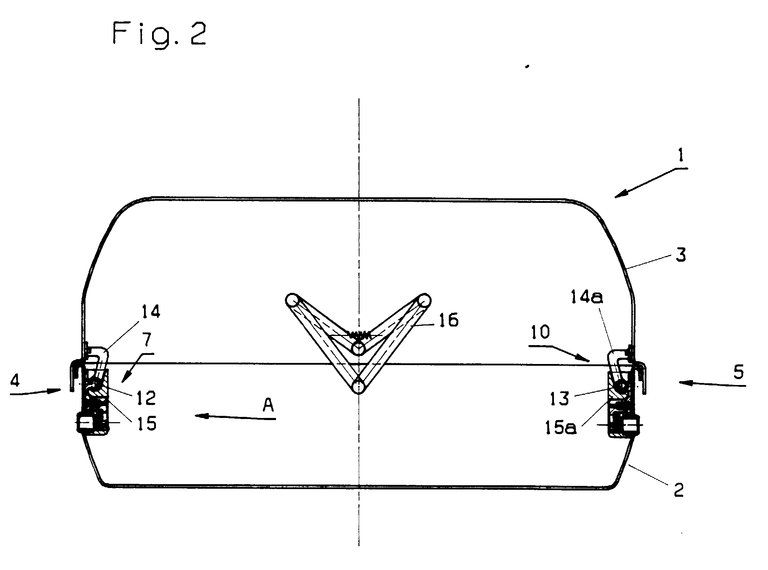

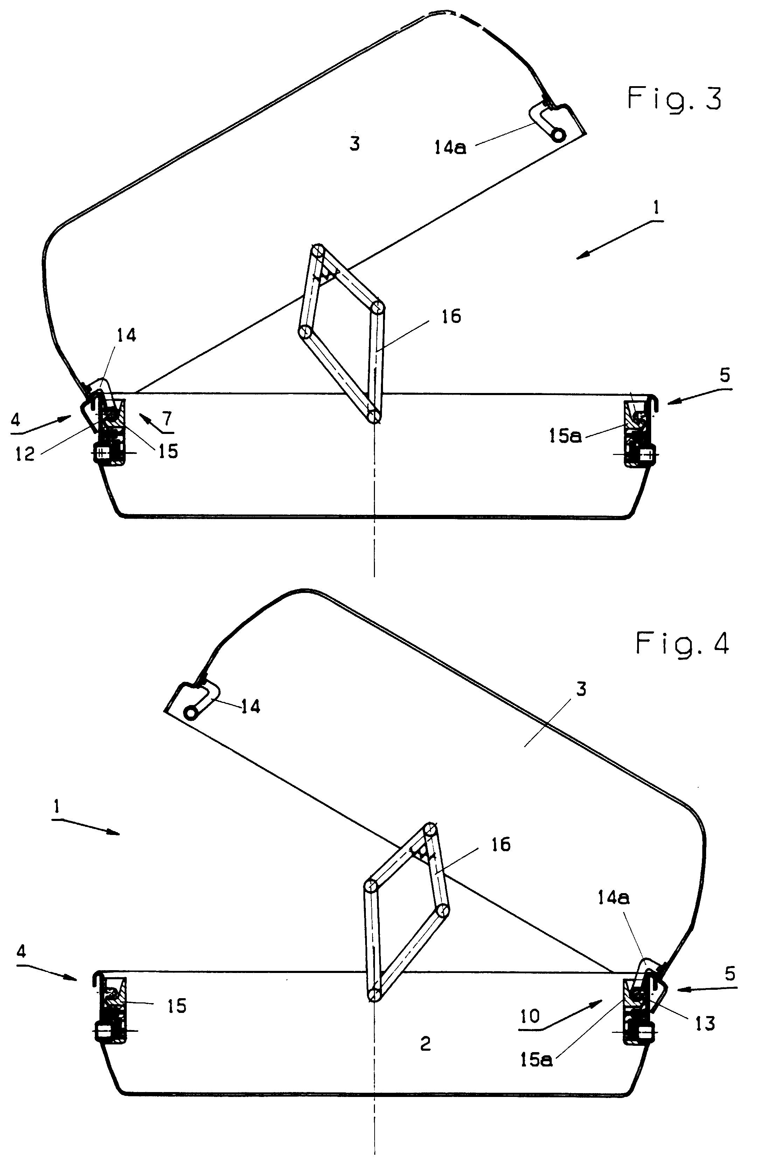

In den Figuren 1 bis 4 ist der Dachkoffer 1 in verschiedenen Positionen hinsichtlich der Stellung des Deckels 3 im Verhältnis zum Unterteil dargestellt. In Figur 1 ist nur eine Draufsicht auf das nach oben offene Unterteil 2 des Dachkoffers 1 ersichtlich. In Figur 2 ist der Deckel 3 im Verhältnis zum Unterteil 2 in der geschlossenen Position dargestellt. Der Deckel 3 ist im Verhältnis zum Unterteil 2 um zwei parallele Seiten 4,5 nach oben verschwenkbar, um die Zugänglichkeit des Dachkoffers 1 von einer zu wählenden Seite des Fahrzeuges, auf dessen Dach der Dachkoffer 1 angebracht ist, zu erleichtern. Die erste Seite 4 ist die linke Seite, um die der Deckel 3, wie in Figur 3 dargestellt, nach oben im Verhältnis zum Unterteil 2 die Offenstellung verschwenkt ist. Hierzu dienen die dieser Seite 4 zugeordneten Scharniere 6,7,8, die entlang der ersten Seite 4 am oberen Rand des Unterteils 2 bzw. unteren Rand des Deckels 3 verteilt angeordnet sind. Entsprechend der Darstellung von Figu= 4 ist der Deckel 3 im Verhältnis zum Unterteil 2 um die der zweiten, rechten Seite 5 zugehörigen Scharniere 9,10,11 in die Offenposition nach oben verschwenkt gezeichnet.

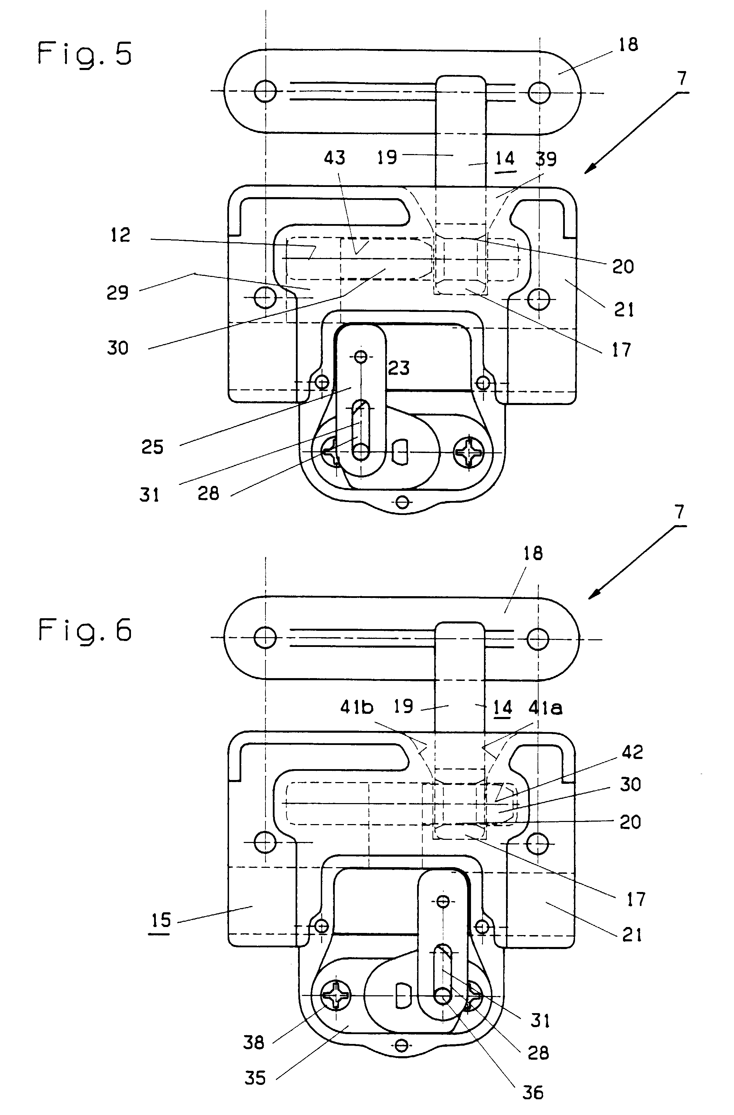

Die Scharnierachse 12 wird durch die der ersten Seite 4 zugehörigen Scharniere 6,7,8 gebildet, während die Scharnierachse 13 zur zweiten Seite 5 gehört und durch die Scharniere 9,10,11 gebildet wird. Die Scharniere 6,7,8,9,10,11 dienen einerseits zur Bildung der Scharnierachsen 12 bzw. 13 und andererseits zur Fixierung des Deckels 3 im Verhältnis zum Unterteil 2 in der in Figur 2 dargestellten Schließposition. In den Figuren 2 bis 4 ist erkennbar, daß die beiden mittleren Scharniere 7 bzw. 10 jeweils aus einem ersten Scharnierteil 14 bzw. 14a und einem zweiten Scharnierteil 15 bzw. 15a bestehen. Das erste Scharnierteil 14 bzw. 14a ist mit dem Deckel 3 fest verbunden, während das zweite Scharnierteil 15, 15a mit dem Unterteil 2 fest verbunden ist. Ferner ist zwischen dem Unterteil 2 und dem Deckel 3 eine Deckelstütze 16 angeordnet, die dazu dient, den Deckel 3, wie aus den Figuren 3 und 4 ersichtlich, in der geöffneten Positicn gegenüber dem Unterteil 2 abzustützen. Nachfolgend ist die Ausbildung eines der mittleren der den beiden Seiten 4,5 zugehörigen Scharniere, nämlich das der Seite 4 zugehörige Scharnier 7, anhand der Figuren 5 bis 8 näher beschrieben.

Dem Deckel 3 ist das erste Scharnierteil 14 zugeordnet. Dieses besteht aus einem Befestigungsflansch 18 zur Festlegung an der Innenseite des Deckels und zwar zum unteren Rand desselben hin.

Von diesem Befestigungsflansch 18 erstreckt sich ein Arm 14 zunächst rechtswinklig nach innen und dann dazu um einen spitzen Winkel abgewinkelt nach unten in Richtung auf das Unterteil 2 zu. Am unteren freien Ende des Armes 19 ist eine Hülse 17 angebracht, die eine Bohrung 20 aufweist, die auf der Scharnierachse 12 zentriert ist. Dem Unterteil 2 ist das zweite Scharnierteil 15 zugeordnet. Dieses ist mit der Wand des Unterteils 2 im Bereich deren oberen Rand fest verbunden. Das zweite Scharnierteil 15 umfaßt ein Lagergehäuse 21, das eine Führungsausnehmung 22 besitzt, die sich parallel zur Scharnierachse 12 erstreckt. In dieser Führungsausnehmung 22 ist die allen Scharnieren 6 bis 9, die der Seite 4 zugeordnet sind, gemeinsame Betätigungsstange 23 parallel zur Scharnierachse 12 verschiebbar gelagert. Die Betätigungsstange 23 trägt im Bereich des Lagergehäuses 15 eines jeden Scharnieres einen an einem abgewinkelten Arm angebrachten Scharnierzapfen 30, dessen Außendurchmesser zu der Bohrung 20 der Hülse 17 passend ausgebildet ist und in Schließstellung zu dieser in Eingriff ist. Von der Betätigungsstange 23 steht ein Vielkantzapfen 24 vor. Ein Betätigungshebel 25 ist auf den Vielkantzapfen 24 mit einer entsprechend dem Vielkantzapfen geformten Ausnehmung 26 aufgesteckt und mit der Betätigungs-stange 23 über einen Verbindungsstift 27 fest verbunden. Der Betätigungshebel 25 weist ein Langloch 28 auf, dessen Achse 31 die Scharnierachse 12 mit Abstand rechtwinklig kreuzt. Der Scharnierzapfen 30 ist über den Befestigungsarm 29 mit der Betätigungsstange 23 fest verbunden. Vorzugsweise sind der Scharnierzapfen 30, der Befestigungsarm 29 und die Betätigungsstange 23 einstückig ausgebildet. Ferner weist das Lagergehäuse 21 eine die Scharnierachse 12 rechtwinklig kreuzende Aufnahmebohrung 32 für einen Schließzylinder 34 auf, der über einen Flansch 35 mit Schrauben 38 im Lagergehäuse 21 gesichert ist. Des weiteren ist eine Aufnahmehülse 33 von der Außenseite der Wandung des Unterteils 2 her in das Lagergehäuse 21 eingesteckt. In dieser ist der Schließzylinder 34 ebenfalls um die Drehachse 37 durch einen Schlüssel verdrehbar aufgenommen. An dem dem aus dem Unterteil 2 herausragenden Ende des Schließzylinders 34 entfernten Ende ist im Verhältnis zur Drehachse 37 ein Betätigungszapfen 36 exzentrisch angeordnet. Der Betätigungszapfen 36 ragt in das Langloch 28 des Betätigungshebels 25 hinein. Durch Verdrehen des Schließzylinders 34 um die Drehachse 37 wird über den Betätigungszapfen 36 eine Kraft auf den Betätigungshebel 25 ausgeübt, welche von diesem auf die Betätigungsstange 23 übertragen wird und damit sämtliche an ihr festgelegten Scharnierzapfen 30 verschiebt. Das Lagergehäuse ist ferner mit einer Zentrierausnehmung 39 versehen, in welche das erste Scharnierteil 14 mit der Hülse 17 und dem Arm 19 im geschlossenen Zustand eintaucht. Die Zentrierausnehmung 39 weist Zentrierflächen 41,41a,41b,41c auf, die dazu dienen, die Außenfläche 40 der Hülse 17 gegenüber dem Lagergehäuse 21 bei Bewegung beispielsweise von der in Figur 4 dargestellten Position in die Schließposition gemäß Figur 2 zu zentrieren, so daß der Scharnierzapfen 30 ungehindert in die Bohrung 20 der Hülse 17 durch Verschieben der Betätigungsstange 23 über den Schließzylinder 34 eingeschoben werden kann.

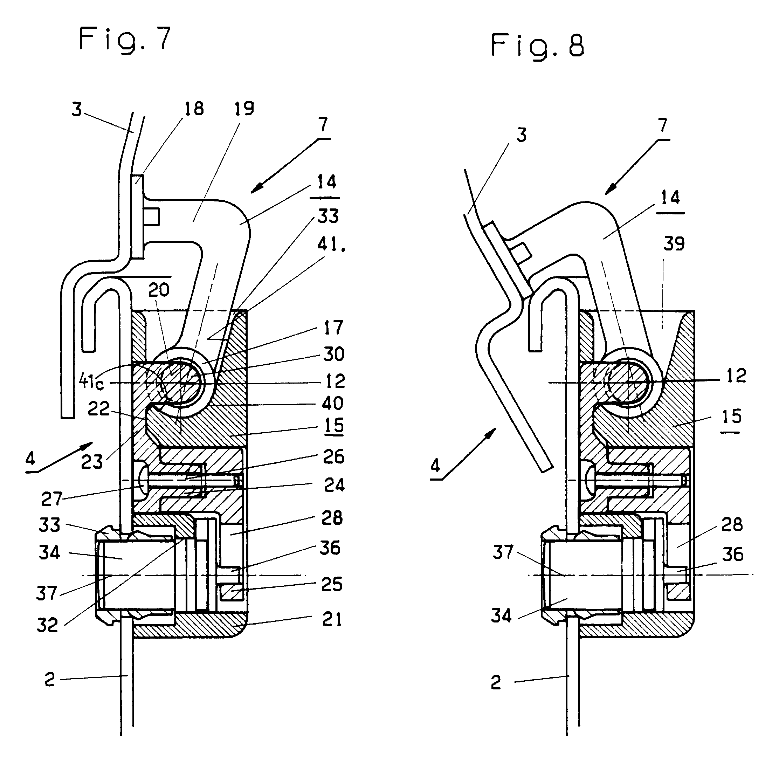

In Figur 8 ist das Scharnier 7 in einer Position dargestellt, die der aufgeklappten Position des Deckels 3 im Verhältnis zu dem Unterteil 2 gemäß Figur 3 entspricht. Um in der Schließposition gemäß Figur 2 verbessert Kräfte, die auf den Deckel 3 einwirken und beispielsweise von einer im Innenraum des Dachkoffers aufgenommen Ladung resultieren, besser aufnehmen zu können, ist im Lagergehäuse 21 eine Bohrung 42 vorhanden, in welche der Scharnierzapfen 30 nach Passieren der Bohrung 20 der Hülse 17 eintaucht. Darüber hinaus ist das Lagergehäuse 21 mit einer auf der der Bohrung 42 gegenüberliegenden Seite der Zentrierausnehmung 39 angeordneten Stützfläche 43 versehen, so daß der Scharnierzapfen 30 sicher geführt und gehalten ist. Es ergibt sich eine Art zweischnittige Lagerung.

In Figur 5 sind der Scharnierzapfen 30 und die Betätigungsstange 23, der er angeformt ist, in der Offenposition dargestellt, so daß der Deckel 3 nach oben bewegt werden kann, wobei sich das erste Scharnierteil 14 mit seiner an dem Arm 19 angebrachten Hülse 17 aus der Zentrierausnehmung 39 des Lagergehäuses 21 nach oben heraus bewegt. Es ist aus Figur 5 ferner erkennbar, daß der Betätigungshebel 25 und damit die Betätigungsstange 23 sich in der nach links verschobenen Position befinden. Wird nun der Schließzylinder 34 im Schließsinne betätigt, so erfolgt eine Verschiebung des Betätigungshebels 25 und damit der Betätigungsstange 23 über den exzentrisch angeordneten Betätigungszapfen 36 nach rechts, wobei der Scharnierzapfen 30 in die Bohrung 20 der Hülse 17 des ersten Scharnierteiles 14 eintaucht und nach Passieren derselben bis in die Bohrung 42 des Lagergehäuses 21 hineinbewegt wird. Bei dieser Stellung sind die beiden Scharnierteile 14,15 einander gegenüber gesichert. Es ist jedoch eine Winkelbewegung des ersten Scharnierteiles 14, das dem Deckel 3 zugeordnet ist, im Verhältnis zum zweiten Scharnierteil 15, welches der Seitenwand des Unterteils 2 zugeordnet ist, möglich und zwar von der in Figur 7 dargestellten Position zu der in Figur 8 dargestellten Position, wenn die der anderen Seite zugehörigen Scharniere in der Offenposition sind)wie sie sich aus Figur 5 ergibt.

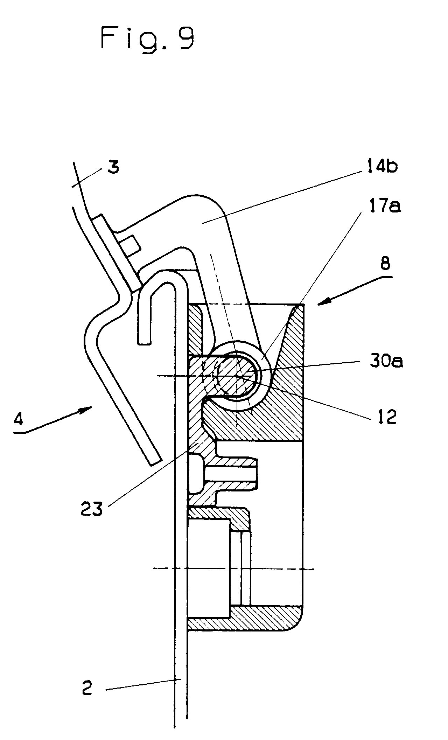

Die Betätigungsstange 23 jeder der beiden Seiten 4,5 ist durchgehend ausgebildet, so daß sie auch den Scharnierzapfen 30a beispielsweise des in Figur 9 dargestellten Scharniers 8 enthält. Das Lagerhäuse 15b entspricht dem des Scharnieres 7, wobei es jedoch nicht mit einem Schließzylinder versehen ist. Dies ist nicht erforderlich, weil der der Betätigungsstange 23 zugehörige und zur Verriegelung dienende Scharnierzapfen 30a durch Betätigung der Betätigungsstange 23 unter Zuhilfenahme des dem Scharnier 7 zugeordneten Schließzylinders 34 ebenfalls in oder außer Eingriff zur Hülse 17a des Scharniers 8 bewegt wird. Die zweite Seite 5 ist entsprechend der ersten Seite 4 mit drei Scharnieren 9,10,11 versehen, von denen das mittlere Scharnier 10 ebenfalls mit einem Schließzylinder ausgestattet ist.

Befinden sich die Scharnierzapfen 30,30a aller der beiden Seiten 4,5 zugehörigen Scharniere 6 bis 11 in einer Position, wie sie in Figur 6 dargestellt ist, bei der die Scharnierzapfen die Bohrungen 20 der den einzelnen Scharnieren 6 bis 11 zugeordneten Hülsen durchgreifen, ergibt sich die Schließposition, bei der der Deckel 3 in fester Anlage im Verhältnis zum Unterteil 2, so wie in Figur 2 dargestellt, gehalten ist.

Die Zentrierflächen 41,41a,41b,41c dienen zur Ausrichtung der Hülse 17 unter Zuhilfenahme deren Außenfläche 40, welche gegen die vorgenannten Zentrierflächen bei Annäherung anlaufen.

### Bezugszeichenliste

- 1: Dachkoffer
- 2: Unterteil
- 3: Deckel
- 4: erste Seite
- 5: zweite Seite
- 6,7,8,9,10,11: Scharniere
- 12,13: Scharnierachse
- 14,14a,14b: erstes Scharnierteil
- 15,15a,15b: zweites Scharnierteil
- 16: Deckelstütze
- 17,17a: Hülse
- 18: Befestigungsflansch
- 19: Arm
- 20: Bohrung
- 21: Lagergehäuse
- 22: Führungsausnehmung
- 23: Betätigungsstange
- 24: Vielkantzapfen
- 25: Betätigungshebel
- 26: Ausnehmung
- 27: Verbindungsstift
- 28: Langloch
- 29: Befestigungsarm
- 30,30a: Scharnierzapfen
- 31: Achse des Langlochs
- 32: Aufnahmebohrung
- 33: Aufnahmehülse
- 34: Schließzylinder
- 35: Flansch
- 36: Betätigungszapfen
- 37: Drehachse
- 38: Schraube
- 39: Zentrierausnehmung
- 40: Außenfläche
- 41,41a,41b,41c: Zentrierfläche
- 42: Bohrung
- 43: Stützfläche

## Patentansprüche

1. Koffer, insbesondere Dachkoffer (1) für Kraftfahrzeuge, mit zwei Kofferteilen, nämlich einem Unterteil (2) und einem Deckel (3), welche jeweils an zwei zueinander parallelen Seiten (4, 5) über mindestens je zwei Scharniere (6, 7, 8, 9, 10, 11) um eine Scharnierachse (12, 13) zueinander verschwenkbar sind, wobei die Scharniere (6, 7, 8, 9, 10, 11) jeweils aus einem eine Hülse (17, 17a) umfassenden ersten (14, 14a, 14b) und einem einen Scharnierzapfen (30, 30a) umfassenden zweiten (15, 15a, 15b) Scharnierteil bestehen, von denen eines dem Deckel (3) und das andere dem Unterteil (2) zugeordnet ist und wobei der Scharnierzapfen (30, 30a) in oder außer Eingriff zur Hülse (17, 17a) verstellbar ist,
dadurch gekennzeichnet,
daß jedes zweite Scharnierteil (15, 15a, 15b) ein Lagergehäuse (21) umfaßt, daß die Scharnierzapfen (30, 30a) aller einer Seite zugehörigen Scharniere (6, 7, 8, 9, 10, 11) an einer gemeinsamen Betätigungsstange (23) angebracht sind und die Scharnierachse (12, 13) bilden, daß jede Betätigungsstange (23) in den Scharnieren (6, 7, 8, 9, 10, 11) zugehörigen Lagergehäusen (21) parallel zur Scharnierachse (12, 13) verstellbar geführt ist, derart, daß zur Verschwenkung des Deckels (3) um die Scharnierzapfen (30, 30a) der einen der Seiten (4, 5) zugehörigen Scharniere (6, 7, 8; 9, 10, 11), die Scharnierteile, die den Scharnieren der anderen Seite zugehörig sind, durch Verschieben der zugehörigen Betätigungsstange (23) außer Eingriff gebracht werden und daß jeweils in einem der einer Seite zugehörigen Lagergehäusen (21) ein Schließzylinder (34) drehbar gelagert ist, welcher zur Verstellung der Betätigungsstange (23) dient.

2. Koffer nach Anspruch 1,
dadurch gekennzeichnet,
daß die Hülse (17, 17a) an einem mit einem Befestigungsflansch (18) versehenen, abgewinkelten Arm (19) angebracht ist.

3. Koffer nach Anspruch 1,
dadurch gekennzeichnet,
daß die Betätigungsstange (23) einen Vielkantzapfen (24) aufweist, auf den ein Betätigungshebel (25) aufgesteckt ist, der ein vertikal zur Betätigungsstange (23) verlaufendes Langloch (28) besitzt, in der ein exzentrisch am Schließzylinder (34) angebrachter Betätigungszapfen (36) zur Verstellung der Betätigungsstange (23) eingreift.

4. Koffer nach Anspruch 1,
dadurch gekennzeichnet,
daß das Lagergehäuse (21) des zweiten Scharnierteils (15, 15a, 15b) eine Zentrierausnehmung (39) für die Hülse (17, 17a) des ersten Scharnierteiles (14, 14a, 14b) aufweist.

5. Koffer nach einem der Ansprüche 1 bis 4,
dadurch gekennzeichnet,
daß die Scharnierzapfen (30) aller einer Seite (4; 5) zugehörigen Scharniere (6 - 8; 9 - 11) der zugehörigen Betätigungsstange (23) angeformt sind.

6. Koffer nach einem der Ansprüche 1 bis 5,
dadurch gekennzeichnet,
daß der Scharnierzapfen (30) im eingerückten Zustand die Hülse (17) passiert und in eine Bohrung (42) des Lagergehäuses (21) eingreift.

## Claims

1. A box, especially a roof luggage box (1) for motor vehicles, having two box parts, i.e. a lower part (2) and a lid (3) which, at each of two sides (4, 5) which are parallel relative to one another, are hinged by at least two hinges (6, 7, 8, 9, 10, 11) per side to be pivotal relative to one another about a hinge axis (i2, 13), with the hinges (6, 7, 8, 9, 10, 11) each consisting of a first hinge part (14, 14a, 14b) comprising a sleeve (17, 17a) and a second hinge part (15, 15a, 15b) comprising a hinge pin (30, 30a), with one hinge part being associated with the lid (3) and the other one with the lower part (2), and with the hinge pin (30, 30a) being displaceable in such a way so as to engage, or being disengaged from, the sleeve (17, 17a),
characterised in
that each second hinge part (15, 15a, 15b) comprises a bearing housing (21), that the hinge pins (30, 30a) of all hinges (6, 7, 8, 9, 10, 11) associated with one side are attached at a joint actuating rod (23) and form the hinge axis (12, 13), that each actuating rod (23) is guided in the bearing housings (21) associated with the hinges (6, 7, 8, 9, 10, 11) so as to be displaceable parallel to the hinge axis (12, 13) in such a way that, for the purpose of pivoting the lid (3) about the hinge pins (30, 30a) of the hinges (6, 7, 8, 9, 10, 11) associated with one of the sides (4, 5), the hinge parts associated with the hinges of the other side are disengaged by moving the associated actuating rod (23) and that in one of the bearing housings (21) associated with each side, there is rotatably supported a locking cylinder (34) which serves to displace the actuating rod (23).

2. A box according to claim 1,
characterised in
that the sleeve (17, 17a) is attached to an angled arm (19) provided with a fixing flange (18).

3. A box according to claim 1,
characterised in
that the actuating rod (23) is provided with a polygonal pin (24) on to which there is mounted an actuating lever (25) which is provided with a slot (28) which extends vertically relative to the actuating rod (23) and which is engaged by an actuating pin (36) provided for displacing the actuating rod (23) and eccentrically attached to the locking cylinder (34).

4. A box according to claim 1,
characterised in
that the bearing housing (21) of the second hinge part (15, 15a, 15b) comprises a centring recess (39) for the sleeve (17, 17a) of the first hinge part (14, 14a, 14b).

5. A box according to any one of claims 1 to 4,
characterised in
that the hinge pins (30) of all hinges (6 - 8; 9 - 11) associated with one side ( 4, 5) are formed on to the associated actuating rod (23).

6. A box according to any one of claims 1 to 5,
characterised in
that in the engaged condition, the hinge pin (30) passes through the sleeve (17) and enters a bore (42) of the bearing housing (21).

## Revendications

1. Coffre, notamment coffre à bagages (1) de toiture d'un véhicule automobile, comportant deux parties de coffre, à savoir une partie inférieure (2) et un couvercle (3), qui sont en basculement l'une par rapport à l'autre respectivement sur deux côtés parallèles l'un à l'autre (4, 5) via au moins deux charnières respectives (6, 7, 8, 9, 10, 11) autour d'un axe de charnière (12, 13), les charnières (6, 7, 8, 9, 10, 11) étant constituées respectivement par une première partie de charnière (14, 14a, 14b) comportant une douille (17, 17a) et par une seconde partie de charnière (15, 15a, 15b) comportant un tourillon de charnière (30, 30a), dont l'une est associée au couvercle (3) et dont l'autre est associée à la partie inférieure (2), et le tourillon de charnière (30, 30a) étant déplaçable pour venir en engagement ou pour se dégager par rapport à la douille (17, 17a), caractérisé en ce que chaque seconde partie de charnière (15, 15a, 15b) comporte un boîtier de montage (21), que les tourillons de charnière (30, 30a) de toutes les charnières (6, 7, 8, 9, 10, 11) associées à un côté sont agencés sur une barre d'actionnement commune (23) et forment l'axe de charnière (12, 13), en ce que chaque barre d'actionnement (23) est menée de façon réglable parallèlement à l'axe de charnière (12, 13) dans des boîtiers de montage (21) associés aux charnières (6, 7, 8, 9, 10, 11), de telle sorte que pour faire basculer le couvercle (3) autour des tourillons (30, 30a) des charnières (6, 7, 8, 9, 10, 11) associées à l'un des côtés (4, 5), les parties de charnière qui sont associées aux charnières de l'autre côté peuvent être dégagées par déplacement de la barre d'actionnement associée (23), et en ce que dans un boîtier de montage respectif (21) associé à l'un des côtés est monté en rotation un cylindre de fermeture (34) qui sert à déplacer la barre d'actionnement (23).

2. Coffre selon la revendication 1, caractérisé en ce que la douille (17, 17a) est agencée sur un bras (19) coudé et pourvu d'une bride de fixation (18).

3. Coffre selon la revendication 1, caractérisé en ce que la barre d'actionnement (23) présente un tourillon polygonal (24) sur lequel est enfiché un levier d'actionnement (25) qui présente un trou oblong (28) s'étendant perpendiculairement à la barre d'actionnement (23), dans lequel s'engage un tourillon d'actionnement (36) agencé excentriquement sur le cylindre de fermeture (34) pour déplacer la barre d'actionnement (23).

4. Coffre selon la revendication 1, caractérisé en ce que le boîtier de montage (21) de la seconde partie de charnière (15, 15a, 15b) présente un évidement de centrage (39) pour la douille (17, 17a) de la première partie de charnière (14, 14a, 14b).

5. Coffre selon l'une quelconque des revendications 1 à 4, caractérisé en ce que les tourillons (30) de toutes les charnières (6 - 8 ; 9 - 11) associées à un côté (4 ; 5) sont formés sur la barre d'actionnement associée (23).

6. Coffre selon l'une quelconque des revendications 1 à 5, caractérisé en ce que le tourillon de charnière (30) passe à travers la douille (17) à l'état rétracté, et s'engage dans un perçage (42) du boîtier de montage (21).
